# FASCICULE DE BREVET EUROPEEN

(11) **EP 1 472 062 B1**
(45) Date de publication et mention de la délivrance du brevet: **07.11.2007**
(21) Numéro de dépôt: 02776639.3
(22) Date de dépôt: 27.11.2002
(51) Int. Cl.: B29C 31/00, B65G 47/84

(54) **INSTALLATION D'ASSEMBLAGE DE COMPOSANTS DE TUBES**
ZUSAMMENSETZUNGSANLAGE VON TUBENKOMPONENTEN
INSTALLATION FOR ASSEMBLING TUBE COMPONENTS

(30) Priorité: 30.11.2001 CH 219701
(43) Date de publication de la demande: 03.11.2004
(73) Titulaire: Aisapack Holding SA, 1896 Vouvry (CH)
(72) Inventeur: VOIGTMANN, Jean-Pierre, CH-1920 Martigny (CH); SCHWAGER, Jean-Claude, CH-1868 Collombey (CH); BENOI, Mathieu, (CH); FERRIN, Didier, CH-1903 Collonges (CH)
(74) Mandataire: Besse, François
(86) Numéro de dépôt international: PCT/CH2002/000642
(87) Numéro de publication internationale: WO 2003/045654

(56) Documents cités:
- EP-A- 0 175 642
- EP-A- 1 048 595
- US-A- 3 563 377

## Description

### Domaine de l'invention

La présente invention se rapporte à une installation d'assemblage de composants de tubes tels que jupes, épaules ou bouchons.

Elle concerne plus précisément un système de transfert de jupes en vue de leur fixation à des épaules.

### Etat de la technique

Le plus souvent, les installations d'assemblage de tubes comprennent une première unité qui prépare des jupes à partir d'une feuille en plastique. Les jupes sont ensuite acheminées sur un convoyeur linéaire et atteignent un système de transfert qui modifie leur orientation, le changement d'orientation pouvant être de 90°. Une fois cette opération effectuée, on fixe les épaules sur une extrémité des jupes.

Le document brevet EP 0 175 642 décrit un système de transfert où le changement d'orientation est réalisé par une roue en forme de tronc de cône qui saisit les jupes. La roue est disposée de telle manière à ce que lors de sa rotation, les jupes subissent un changement d'orientation pouvant atteindre 90°.

Les installations de l'état de la technique, outre leur relative grande taille, ne permettent pas de traiter un nombre élevé de tubes par unité de temps, par exemple 300 par minute. Ceci résulte notamment du fait que l'on doive changer l'orientation des jupes préalablement à leur fixation aux épaules.

### Résumé de l'invention

La présente invention vise notamment à remédier aux problèmes précités.

Elle concerne une installation d'assemblage de composants de tubes, notamment de jupes avec des épaules, comprenant les éléments suivants disposés successivement : un convoyeur linéaire de jupes, un système de transfert adapté pour appliquer un changement d'orientation des jupes d'environ 90°, une unité de fixation pour la fixation des épaules aux jupes, caractérisée en ce que le système de transfert est constitué d'un dispositif de préhension des jupes et d'un dispositif de changement d'orientation des jupes, le dispositif de changement d'orientation comprenant un convoyeur rotatif, du type bande transporteuse, qui est disposé perpendiculairement à la direction du convoyeur linéaire, ledit convoyeur rotatif comprenant une courroie en rotation autour d'une direction formant un angle d'environ 45° par rapport à la direction du convoyeur linéaire, la courroie comportant des éléments de saisie des jupes dont la forme est conçue de façon à ce que les jupes soient initialement saisies sur l'un des côtés du convoyeur rotatif selon une direction parallèle à celle du convoyeur linéaire et qu'elles subissent un changement d'orientation de 90° lorsqu'elles passent de l'autre côté du convoyeur rotatif.

Selon un mode préférentiel de réalisation de l'invention, les éléments de saisie sont de forme sensiblement parallélépipédique dont une face, la face de saisie, est convexe, la courbure de la face de saisie étant sensiblement identique à la courbure de la surface externe des jupes de façon à ce que ces dernières se plaquent le mieux possible sur la face de saisie. Les éléments de saisie étant orientés selon une direction formant un angle d'environ 45° avec la surface de la courroie.

De préférence, afin d'obtenir un taux de traitement élevé, le convoyeur rotatif comprend deux courroies disposées en parallèle, chaque courroie comportant un groupé d'éléments de saisie des jupes, le convoyeur étant conçu de manière à ce que lesdits groupes soient disposés en opposition de phase.

Un nombre supérieur de courroies disposées en parallèle peut naturellement être envisagé.

Avantageusement, le dispositif de préhension des jupes comprend une roue pourvue d'une pluralité d'éléments de préhension, le convoyeur linéaire étant disposé à proximité de la roue, selon l'une de ses tangentes, la zone ainsi définie représentant le site de la préhension des jupes, les éléments de préhension sont disposés selon une direction parallèle à celle du convoyeur linéaire.

Selon une variante de l'invention, les éléments de saisie et/ou les éléments de préhension comprennent des moyens permettant de réaliser une aspiration et optionnellement un soufflage, ceci afin d'assurer une fixation (aspiration) ou un retrait (soufflage) efficace des jupes.

Comme on le verra par la suite, l'installation selon l'invention offre notamment les avantages suivants par rapport aux installations de l'état de la technique :
- Prise dans son ensemble, l'installation est relativement compacte.
- Augmentation du taux de traitement des tubes. Selon la configuration de l'installation, plus de 300 tubes par minute peuvent être traités.
- Nombre réduit de pièces en contact avec les tubes lors du traitement, d'où une diminution des risques de contamination ou de malformation des tubes
- Grande fiabilité au fonctionnement. Aucun transfert partiel par gravité, d'où réduction du risque de blocage de l'installation et par conséquent réduction des pertes.
- Les tubes ne subissent pas une variation aléatoire de l'orientation angulaire par rapport à leur axe. Ceci offre la possibilité de positionner précisément un bouchon dont le pourtour est asymétrique (présence d'une languette p.ex.) par rapport à l'étiquette située sur la jupe.

Quelques exemples de réalisation de l'invention sont décrits ci-après au moyen des figures suivantes :
La figure 1 représente une installation selon l'invention vue de face.
La figure 2 représente une vue simplifiée du transfert d'un tube entre le dispositif de préhension et le dispositif de changement d'orientation.
La figure 3 montre, vu de dessus, le dispositif de changement d'orientation dans une position particulière
La figure 4 montre, vu de dessus, le dispositif de changement d'orientation dans une autre position particulière.
La figure 5 montre un élément de saisie.

Les objets décrits dans les exemples portent les références suivantes :
- 1.: Jupe
- 2.: Tube sans fin
- 3.: Couteau rotatif
- 4.: Convoyeur linéaire de jupes
- 5.: Espace entre deux jupes sur le convoyeur linéaire
- 6.: Machine pour la fabrication de jupes (body maker)
- 7.: Système de transfert
- 8.: Machine d'assemblage
- 9.: Système de préhension
- 10.: Elément de préhension
- 11.: Roue à chaîne centrale fixe
- 12.: Chaîne
- 13.: Roue à chaîne
- 14.: Roulement
- 15.: Elément de saisie
- 16.: Station charge tubes
- 17.: Convoyeur rotatif
- 18.: 1ere courroie
- 19.: 2^{e} courroie
- 20.: Ouvertures convoyeur rotatif
- 21.: Zone de transfert entre le convoyeur linéaire et le système de préhension
- 22.: Face de saisie
- 23.: Ouverture face de saisie
- 24.: Ventouse
- 25.: Polygone rotatif

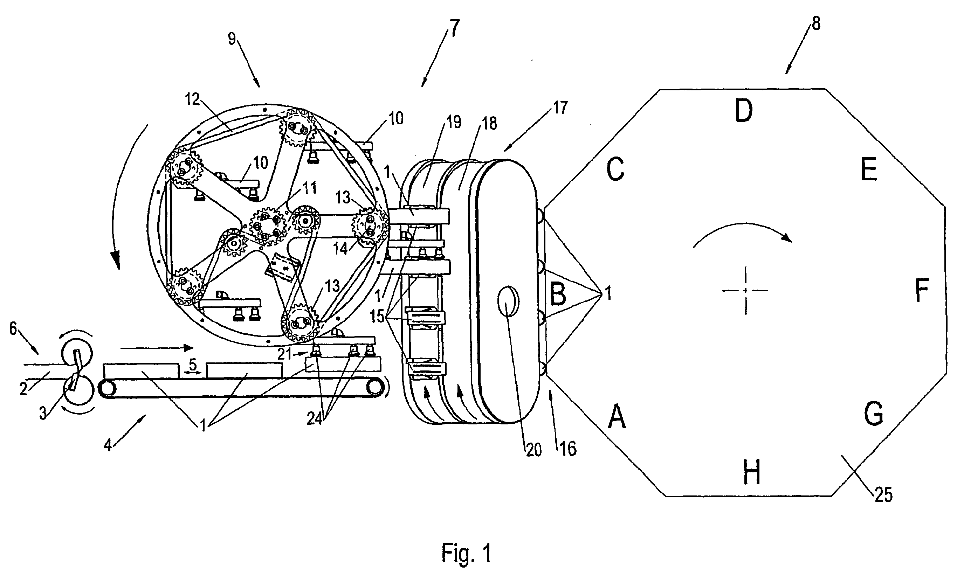

Les jupes **1** sont formées à partir d'une bande en plastique, multicouche dans la majorité des cas, provenant d'une bobine. Par une mise en forme progressive dans une cloche avec mandrin intérieur et par une soudure latérale, on obtient ainsi un tube sans fin **2** (voir figure 1). Ce procédé est en continu, la bande en plastique est tractée à travers les différentes stations de traitement au moyen de courroies qui adhèrent à la surface extérieure du tube sans fin **2** lorsque celui-ci entoure le mandrin intérieur. Un couteau rotatif **3** coupe le tube sans fin **2** et forme ainsi des jupes **1**.

Les jupes sont ensuite entraînées par un convoyeur linéaire et horizontal **4** ayant une vitesse constante et supérieure à la vitesse d'avance du tube sans fin **2**, ce qui permet d'espacer **5** les jupes **1** lors de leur déplacement sur le convoyeur **4**. La machine **6** qui produit des tubes selon ce principe se nomme communément « Bodymachine » ou « Body-Maker ».

En aval, un système de transfert **7**, décrit ci-dessous, alimente une machine d'assemblage **8** avec des jupes **1**. Contrairement au convoyeur linéaire **4** qui fonctionne en continu, la machine d'assemblage **8** travaille en mode discontinu, en indexage. A chaque indexage, elle assemble successivement les éléments constituant le tube et ceci sur des stations de travail réparties le long d'un polygone rotatif **25**. Comme on peut le voir de façon très schématique sur la figure **1**, la machine d'assemblage effectue successivement les opérations suivantes :
A. Charge épaule
B. Charge jupe
C. Préchauffage de l'épaule
D. Soudage de l'épaule à la jupe
E. Soudage d'une membrane operculante l'orifice de l'épaule
F. Pose du bouchon
G. Serrage du bouchon
H. Décharge du tube fini

Après avoir transité au travers du système de transfert **7**, l'axe des jupes **1** a subi un changement d'orientation de 90°. Sur le convoyeur linéaire **4**, les jupes **1** se déplacent parallèlement à la direction de déplacement du convoyeur linéaire **4** alors qu'elles se déplacent perpendiculairement à cette direction lorsqu'elles se trouvent dans la machine d'assemblage **8**.

Il en résulte que l'installation doit répondre à l'exigence suivante, essentiellement au niveau du système de transfert **7** :

Transférer des jupes se déplaçant à une vitesse constante, arrivant régulièrement l'une après l'autre à une cadence donnée, dans un système de traitement (la station d'assemblage **8**) traitant les tubes par groupe, de quatre dans le cas présent, et ceci après avoir fait subir un changement d'orientation de 90° aux jupes 1 afin de rendre possible la fixation d'épaules. De cette exigence, on peut notamment déduire que la cadence de la machine d'assemblage **8**, pour quatre tubes traités simultanément, doit avoir une cadence 4 fois moins élevée que celle des jupes **1** arrivant sur le système de transfert **7** en provenance du convoyeur linéaire **4**. Il en résulte également que dans le cas présent, la machine d'assemblage **8** doit effectuer un nombre de cycle dont la fréquence est quatre fois moins élevée que celle à laquelle les jupes **1** arrivent vers le système de transfert **7**.

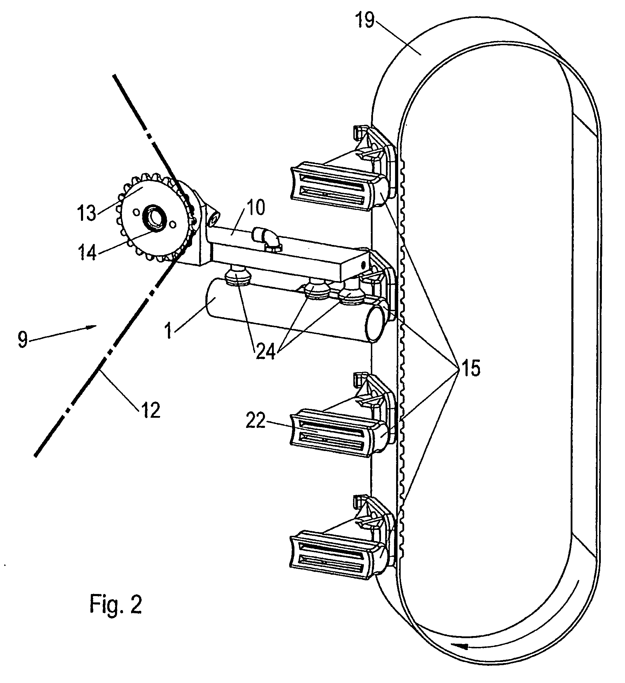

Les exigences décrites précédemment sont satisfaites grâce à la configuration suivante : Le système de transfert comprend une roue **9** munie d'un nombre **n** d'éléments de préhension **10** fixés de manière à maintenir une direction toujours parallèle à celle du convoyeur linéaire lors de leur rotation autour de la roue **9**. Chaque élément de préhension **10** est constitué d'une pièce longitudinale muni d'un groupe de ventouses **24** qui sont connectées à un système d'aspiration et à un système de soufflage. Le maintien des éléments de préhension **15** dans une position horizontale tout en tournant sur une trajectoire circulaire se fait par une roue à chaîne centrale fixe **11**, une chaîne **12** et des roues à chaîne **13** logées sur des roulements **14**, les éléments de préhension étant montés sur les roues à chaîne **13**. Pour assurer une prise en charge efficace des jupes **1** par les éléments de préhension **10**, la vitesse tangentielle de la roue **9**, plus précisément au niveau des éléments de préhension, doit être égale à la vitesse linéaire des jupes **1** lors de leur déplacement sur le convoyeur linéaire **4**. La prise en charge des jupes **1** se fait dans la position 6h (si l'on assimile la roue **9** à une montre). A la position 3h (voir figure 2), les jupes **1** sont saisies par des éléments de saisie **15** disposés sur les courroies **18,19** d'un convoyeur rotatif **17**, ce dernier jouant le rôle de système de changement d'orientation comme on le comprendra ci-après. A l'instar des vitesses tangentielle de la roue **9** et du convoyeur linéaire **4**, à cet endroit, la vitesse de déplacement des courroies **18,19** est identique à la vitesse tangentielle de la roue **9**. Les deux systèmes de préhension, de la roue **9** et du convoyeur rotatif **17**, sont asservis par des pompes à vide à travers des vannes de réversion aspiration/soufflage. Le passage d'un système de préhension à l'autre, ainsi que le transfert des jupes **1** du convoyeur rotatif **17** à la machine d'assemblage **8**, sont optimalisés par un changement très précis d'un mode de travail « aspiration ou soufflage » inversé d'un système de préhension relativement à l'autre. En fait, lorsque les deux systèmes de préhension se recouvrent géométriquement dans la zone de 3h où les mouvements momentanés sont très proches pour une petite fenêtre de temps, on passe du mode aspiration au mode soufflage pour un système de préhension et inversement pour l'autre. Bien évidemment, la configuration des deux systèmes de préhension doit être telle qu'à chaque passage dans la zone 3h d'un élément de préhension **10**, un élément de saisie **15** doit lui faire face.

Le convoyeur rotatif **17**, disposé perpendiculairement à la direction définie par le convoyeur linéaire **4**, amène les jupes **1** vers la machine d'assemblage **8**. Les deux courroies **18,19** du convoyeur rotatif **17** tournent autour d'une direction formant un angle de 45° par rapport à la direction du convoyeur linéaire **4**.

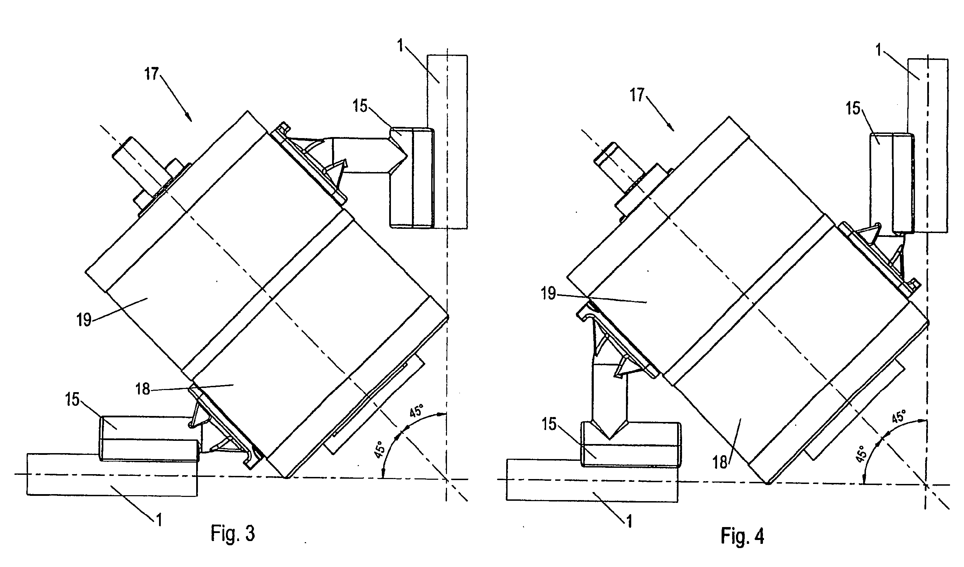

Chaque courroie **18,19** est équipée d'un groupe de quatre éléments de saisie **15** disposés proches les uns des autres. Les deux courroies **18, 19**, comme on peut le remarquer sur les figures 3 et 4, se relaient alternativement de manière à ce que les groupes d'éléments de saisie **15** soient en opposition de phase, càd que lorsqu'une courroie **18,19** avec ses quatre éléments de saisie **15** se trouve à l'arrêt, du côté de la machine d'assemblage **8**, pour permettre la charge des jupes **1** sur les mandrins de la machine d'assemblage **8**, l'autre courroie **19,18** est en train de collecter les jupes en provenance de la roue **9**.

Il importe de souligner l'importance de l'orientation du convoyeur rotatif **17**, notamment de la direction autour de laquelle tournent les courroies **18,19**. Les angles de 45° précédemment mentionnés permettent d'obtenir un changement d'orientation de 90° pour les jupes **1**.

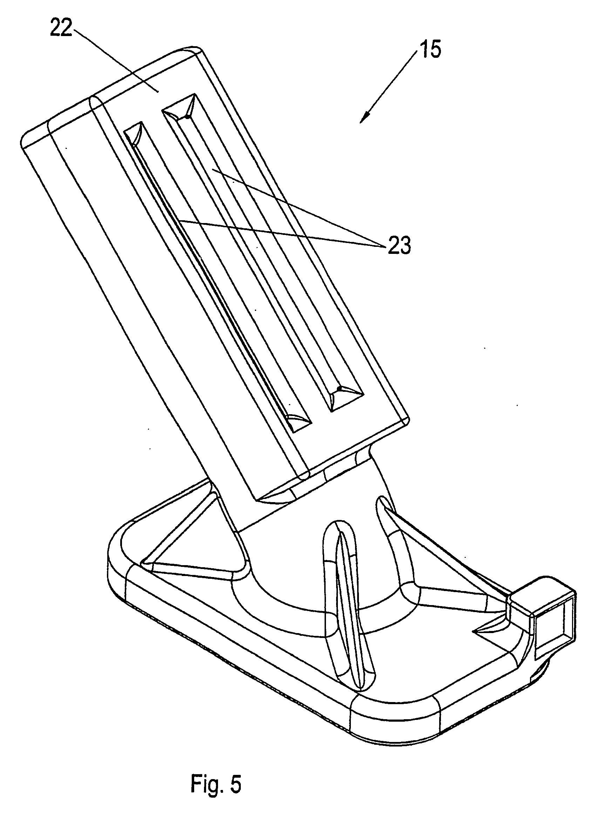

Un élément de saisie **15** est illustré à la figure 5. Sa forme ressemble approximativement à un parallélépipède rectangle dont une face, la face de saisie **22** est convexe. Sa courbure est sensiblement identique à celle de la courbure externe des jupes **1** de manière à ce que les deux surfaces respectives soient en contact intime. La face de saisie **22** comporte deux ouvertures **23** qui sont reliées, à travers les courroies **18,19** qui sont perforées à l'endroit ou se fixent les éléments de saisie **15**, à un système d'aspiration et à un système de soufflage. Pour instaurer un vide à travers les ouvertures **23** lorsque les jupes **1** doivent être fixées aux éléments de saisie **15** ou pour souffler à travers les ouvertures **23** lorsque les jupes **1** doivent être retirées des éléments de saisie **15**, on dispose deux compartiments étanches à l'intérieur du convoyeur rotatif **17**, chaque compartiment étant mis en relation avec une courroie **18,19**, càd un groupe d'éléments de saisie **15**, les compartiments sont reliés à un système d'aspiration et à un système de soufflage via des ouvertures **20** disposées sur les côtés du convoyeur rotatif **17**.

Ainsi, lorsqu'un groupe d'éléments de saisie **15** prend les jupes **1**, un vide est instauré dans chaque élément de saisie **15**. Simultanément, l'autre groupe d'éléments de saisie **15** décharge les jupes **1** et un soufflage est réalisé dans chaque élément de saisie **15**.

Il va sans dire que l'invention ne se limite pas à l'exemple décrit ci-dessous. Il n'est par exemple pas nécessaire d'utiliser des systèmes de préhension qui fonctionnent par aspiration.

De même, la roue peut elle être remplacée par tout autre système de préhension permettant d'acheminer les jupes vers les éléments de saisie des courroies.

Les courroies elles-mêmes pourraient éventuellement être remplacées par un systèmes de chaînes sur lesquelles viendraient se fixer les éléments de saisie.

## Revendications

1. Installation d'assemblage de composants de tubes, notamment de jupes (1) avec des épaules, comprenant les éléments suivants disposés successivement : un convoyeur linéaire de jupes (4), un système de transfert (7) adapté pour appliquer un changement d'orientation des jupes (1) d'environ 90°, une unité d'assemblage (8) pour la fixation des épaules aux jupes (1), **caractérisée en ce que** le système de transfert (7) est constitué d'un dispositif de préhension des jupes (9) et d'un dispositif de changement d'orientation des jupes (17), le dispositif de changement d'orientation comprenant un convoyeur rotatif (17), du type bande transporteuse, qui est disposé perpendiculairement à la direction du convoyeur linéaire (4), ledit convoyeur rotatif (17) comprenant une courroie (18,19) en rotation autour d'une direction formant un angle d'environ 45° par rapport à la direction du convoyeur linéaire (4), la courroie (18,19) comportant des éléments de saisie des jupes (15) dont la forme est conçue de façon à ce que les jupes (1) soient initialement saisies sur l'un des côtés du convoyeur rotatif (17) selon une direction parallèle à celle du convoyeur linéaire (4) et qu'elles subissent un changement d'orientation de 90° lorsqu'elles passent de l'autre côté du convoyeur rotatif (17).

2. Installation selon la revendication précédente **caractérisée en ce que** lesdits éléments de saisie (15) sont de forme sensiblement parallélépipédique dont une face, la face de saisie (22), est convexe et comporte au moins une ouverture (23) connectée à un système d'aspiration, la courbure de la face de saisie (22) étant sensiblement identique à la courbure de la surface externe des jupes (1), les éléments de saisie (15) étant orientés selon une direction formant un angle d'environ 45° avec la surface de la courroie (18,19).

3. Installation selon la revendication précédente **caractérisée en ce que** ladite ouverture (23) est également connectée à un système de soufflage.

4. Installation selon l'une quelconque des revendications précédentes **caractérisée en ce que** le convoyeur rotatif (17) comprend deux courroies (18,19) disposées en parallèle, chaque courroie (18,19) comportant un groupe d'éléments de saisie des jupes (15), le convoyeur rotatif (17) étant conçu de manière à ce que lesdits groupes soient disposés en opposition de phase.

5. Installation selon l'une quelconque des revendications précédentes **caractérisée en ce que** le dispositif de préhension des jupes comprend une roue (9) pourvue d'une pluralité d'éléments de préhension (10), le convoyeur linéaire (4) étant disposé à proximité de la roue (9), selon l'une de ses tangentes, la zone ainsi définie (21) représentant le site de la préhension des jupes (1), les éléments de préhension (10) étant disposés selon une direction parallèle à celle du convoyeur linéaire (4).

6. Installation selon la revendication précédente **caractérisée en ce que** les éléments de préhension (10) comprennent une pluralité de ventouses (24) reliées à un système d'aspiration.

7. Installation selon la revendication précédente **caractérisée en ce que** les ventouses (24) sont également reliées à un système de soufflage.

8. Dispositif de préhension de jupes pour installation d'assemblage de composants de tubes telle que définie selon l'une quelconque des revendications 1 à 8 **caractérisé en ce qu'**il comprend une roue (9) pourvue d'une pluralité d'éléments de préhension (10).

9. Dispositif de changement d'orientation de jupes pour installation d'assemblage de composants de tubes telle que définie selon l'une quelconque des revendications 1 à 8 **caractérisé en ce qu'**il comprend un convoyeur rotatif (17) du type bande transporteuse, ledit convoyeur rotatif (17) comprenant une courroie (18,19) en rotation autour d'une première direction, ladite courroie (18,19) comportant des éléments de saisie des jupes (15) dont la forme est conçue de façon à ce que les jupes (1) soient initialement saisies sur l'un des côtés du convoyeur rotatif (17) selon une deuxième direction et qu'elles subissent un changement d'orientation de 90° lorsqu'elles passent de l'autre côté du convoyeur rotatif (17).

## Claims

1. Installation for assembling tube components, particularly bodies (1) with shoulders, comprising the following elements arranged in succession: a linear body conveyor (4), a transfer system (7) designed to apply a change in orientation to the bodies (1) of about 90°, an assembly unit (8) for fixing the shoulders to the bodies (1), **characterized in that** the transfer system (7) consists of a device for gripping the bodies (9) and a device for changing the orientation of the bodies (17), the orientation-change device comprising a rotary conveyor (17), of the conveyor belt type, which is arranged at right angles to the direction of the linear conveyor (4), the said rotary conveyor (17) comprising a belt (18,19) rotating about a direction which forms an angle of about 45° with the direction of the linear conveyor (4), the belt (18,19) comprising elements (15) for grasping the bodies, the shape of which is designed so that the bodies (1) are initially grasped on one of the sides of the rotary conveyor (17), in a direction parallel to that of the linear conveyor (4), and that they undergo a change in orientation of 90° when they pass to the other side of the rotary conveyor (17).

2. Installation according to the preceding claim, **characterized in that** the said grasping elements (15) have a substantially parallelepipedal shape, one face of which, the grasping face (22), is convex and has at least one opening (23) connected to a suction system, the curvature of the grasping face (22) being substantially the same as the curvature of the external surface of the bodies (1), the grasping elements (15) being oriented in a direction which forms an angle of about 45° with the surface of the belt (18,19).

3. Installation according to the preceding claim, **characterized in that** the said opening (23) is also connected to a blowing system.

4. Installation according to any one of the preceding claims, **characterized in that** the rotary conveyor (17) comprises two belts (18,19) arranged in parallel, each belt (18,19) comprising a group of body-grasping elements (15), the rotary conveyor (17) being designed so that the said groups are arranged in phase opposition.

5. Installation according to any one of the preceding claims, **characterized in that** the body-gripping device comprises a wheel (9) provided with a plurality of gripping elements (10), the linear conveyor (4) being arranged near the wheel (9), along one of its tangents, the region thus defined (21) representing the site at which the bodies (1) are gripped, the gripping elements (10) being arranged in a direction parallel to that of the linear conveyor (4).

6. Installation according to the preceding claim, **characterized in that** the gripping elements (10) comprise a plurality of suction cups (24) connected to a suction system.

7. Installation according to the preceding claim, **characterized in that** the suction cups (24) are also connected to a blowing system.

8. Device for gripping bodies for an installation for assembling tube components such as that defined according to any one of Claims 1 to 8, **characterized in that** it comprises a wheel (9) provided with a plurality of gripping elements (10).

9. Device for changing the orientation of bodies for an installation for assembling tube components such as that defined in any one of Claims 1 to 8, **characterized in that** it comprises a rotary conveyor (17) of the conveyor belt type, the said rotary conveyor (17) comprising a belt (18, 19) rotating about a first direction, the said belt (18,19) comprising body-grasping elements (15), the shape of which is designed so that the bodies (1) are initially gripped on one of the sides of the rotary conveyor (17) in a second direction and undergo a change in orientation of 90° when they pass to the other side of the rotary conveyor (17).

## Patentansprüche

1. Anlage zum Zusammenfügen von Röhrenkomponenten, insbesondere Körpern (1) mit Schultern, die die folgenden, hintereinander angeordneten Elemente umfasst: einen Linearkörperförderer (4), ein Transfersystem (7), das zur Beaufschlagung der Körper (1) mit einer Ausrichtungsänderung von 90° ausgeführt ist, eine Zusammenfügeinheit (8) zur Befestigung der Schultern an den Körpern (1), **dadurch gekennzeichnet, dass** das Transfersystem (7) aus einer Vorrichtung (9) zum Ergreifen der Körper und aus einer Vorrichtung (17) zum Ändern der Ausrichtung der Körper besteht, wobei die Ausrichtungsänderungsvorrichtung einen Umlaufförderer (17) der Förderbandart umfasst, der in einem rechten Winkel zur Richtung des Linearförderers (4) angeordnet ist, wobei der Umlaufförderer (17) ein Förderband (18, 19) aufweist, das um eine Richtung umläuft, die einen Winkel von ca. 45° zur Richtung des Linearförderers (4) bildet, wobei das Förderband (18, 19) Elemente (15) zum Erfassen der Körper umfasst, deren Form so ausgeführt ist, dass die Körper (1) anfangs auf einer der Seiten des Umlaufförderers (17) in einer parallel zu der Richtung des Linearförderers (4) verlaufenden Richtung erfasst werden und dass sie eine Ausrichtungsänderung von 90° erfahren, wenn sie zur anderen Seite des Umlaufförderers (17) passieren.

2. Anlage nach dem vorhergehenden Anspruch, **dadurch gekennzeichnet, dass** die Erfassungselemente (15) eine im Wesentlichen parallelepipedische Form aufweisen, von der eine Fläche, die Erfassungsfläche (22), konvex ist und mindestens eine Öffnung (23) umfasst, die mit einem Saugsystem verbunden ist, wobei die Krümmung der Erfassungsfläche (22) im Wesentlichen der Krümmung der Außenfläche der Körper (1) entspricht, wobei die Erfassungselemente (15) in einer Richtung ausgerichtet sind, die zur Oberfläche des Förderbands (18, 19) einen Winkel von ca. 45° bildet.

3. Anlage nach dem vorhergehenden Anspruch, **dadurch gekennzeichnet, dass** die Öffnung (23) des Weiteren mit einem Gebläsesystem verbunden ist.

4. Anlage nach einem der vorhergehenden Ansprüche, **dadurch gekennzeichnet, dass** der Umlaufförderer (17) zwei Förderbänder (18, 19) umfasst, die parallel angeordnet sind, wobei jedes Förderband (18, 19) eine Gruppe von Körpererfassungselementen (15) umfasst, und wobei der Umlaufförderer (17) so ausgeführt ist, dass die Gruppen gegenphasig angeordnet sind.

5. Anlage nach einem der vorhergehenden Ansprüche, **dadurch gekennzeichnet, dass** die Körpergreifvorrichtung ein mit mehreren Greifelementen (10) versehenes Rad (9) umfasst, wobei der Linearförderer (4) in der Nähe des Rads (9) entlang einer seiner Tangenten angeordnet ist, wobei der so definierte Bereich (21) die Stelle darstellt, an der die Körper (1) ergriffen werden, wobei die Greifelemente (10) in einer parallel zu der Richtung des Linearförderers (4) verlaufenden Richtung angeordnet sind.

6. Anlage nach dem vorhergehenden Anspruch, **dadurch gekennzeichnet, dass** die Greifelemente (10) mehrere Saugnäpfe (24) umfassen, die mit einem Saugsystem verbunden sind.

7. Anlage nach dem vorhergehenden Anspruch, **dadurch gekennzeichnet, dass** die Saugnäpfe (24) auch mit einem Gebläsesystem verbunden sind.

8. Vorrichtung zum Ergreifen von Körpern für eine Anlage zum Zusammenfügen von Röhrenkomponenten nach einem der Ansprüche 1 bis 7, **dadurch gekennzeichnet, dass** sie ein mit mehreren Greifelementen (10) versehenes Rad (9) aufweist.

9. Vorrichtung zur Ausrichtungsänderung von Körpern für eine Anlage zum Zusammenfügen von Röhrenkomponenten nach einem der Ansprüche 1 bis 8, **dadurch gekennzeichnet, dass** sie einen Umlaufförderer (17) der Förderbandart aufweist, wobei der Umlaufförderer (17) ein Förderband (18, 19) aufweist, das sich in einer ersten Richtung dreht und Elemente (15) zum Erfassen der Körper umfasst, deren Form so ausgeführt ist, dass die Körper (1) anfangs auf einer der Seiten des Umlaufförderers (17) in einer zweiten Richtung erfasst werden und dass sie eine Ausrichtungsänderung von 90° erfahren, wenn sie zur anderen Seite des Umlaufförderers (17) passieren.
